# EUROPEAN PATENT APPLICATION

(11) **EP 4 851 899 A1**
(43) Date of publication of application: **09.12.2026**
(21) Application number: 26181337.2
(22) Date of filing: 27.05.2026
(51) Int. Cl.: G06Q 20/06, G06Q 20/22, G06Q 20/36, G06Q 20/40

(54) **METHOD AND SYSTEM FOR PRIVACY PRESERVING AND COMPLIANT CENTRAL BANK DIGITAL CURRENCY TRANSACTIONS**

(30) Priority: 02.06.2025 IN 202521053534
(71) Applicant: Tata Consultancy Services Limited, Mumbai, Maharashtra 400 021 (IN)
(72) Inventor: AHUJA, Aditya, 411028 Pune, Maharashtra (IN); PANI, Siddhasagar, 560066 Bangalore, Karnataka (IN); KANCHANAPALLI, Srujana, 560100 Bangalore, Karnataka (IN); RAMACHANDRAN, Vigneswaran, 600113 Chennai, Tamil Nadu (IN); ALASINGARA BHATTACHAR, Rajan Mindigal, 560066 Bangalore, Karnataka (IN); LODHA, Sachin Premsukh, 411028 Pune, Maharashtra (IN)
(74) Representative: Goddar, Heinz J.

(57) **Abstract**

Central bank digital currency (CBDCs) hold the promise of a reliable and convenient digital payment system Fortunately, the security requirements for CBDC systems is a well-studied problem. However, no conventional approaches focused in developing a CBDC system which balances both privacy-preserving accessibility and regulatory compliance. The CBDC system of the present disclosure operates in two modes. In the first mode, the user is trusted to operate in a fully offline mode (Collateral Fully Offline (CFO)) under the promise of forfeiting a collateral to the state in case any transaction associated with it is deemed to be non-compliant. The user is switched from CFO to the second mode based on a plurality of constraints. In the second mode (Know your customer Staged Offline Mode (KSO)), the user is untrusted and must operate in a staged offline setting with complete Know Your Customer (KYC) for any transaction it is a part of.

## Description

### CROSS-REFERENCE TO RELATED APPLICATIONS AND PRIORITY

The present application claims priority to Indian application no. 202521053534, filed on June 02, 2025.

### TECHNICAL FIELD

The disclosure herein generally relates to the field of digital currency and, more particularly, to a method and system for privacy preserving and compliant central bank digital currency transactions.

### BACKGROUND

Central bank digital currency (CBDCs) holds the promise of a reliable and convenient digital payment system that is backed by the corresponding nation state. CBDCs have emerged because of the revolution induced by the introduction of crypto assets for (decentralized) payments, as a viable payment system not prone to the valuation uncertainties of other unbacked assets and stable coins, and so a reasonable competitor of the same. Unfortunately, present day CBDC systems for major countries in the world are underdeveloped operationally. One reason being that the problem of a comprehensive full-spectrum design for such systems is still open.

There are three major aspects of a holistic CBDC system design: (i) financial inclusion: the service should be accessible to the most remote of users, with infrequent to no CBDC network connectivity (ii) system security: the service should guarantee basic security requirements such as no double spending, unforgeable transactions, and non-repudiation of transactions and (iii) regulatory compliance: the service must be compliant with the stated Anti-Money Laundering (AML)/Countering the Financing of Terrorism (CFT) requirements, central bank laws, and monetary policy. Fortunately, the security requirements for CBDC systems are a well-studied problem. However, no conventional approaches focused in developing a CBDC system which balances both privacy-preserving accessibility and regulatory compliance.

### SUMMARY

Embodiments of the present disclosure present technological improvements as solutions to one or more of the above-mentioned technical problems recognized by the inventors in conventional systems. For example, in one embodiment, a method for privacy preserving and compliant central bank digital currency transactions is provided. The method includes receiving, by one or more hardware processors, a Central Bank Digital Currency (CBDC) service subscription request from a plurality of users, wherein the CBDC service request is received by a CBDC Service Provider (CSP). Further, the method includes initializing, via the one or more hardware processors, a Collateral Fully Offline (CFO) transaction mode for each of a plurality of legitimate users from among the plurality of users, in response to the received CBDC service subscription request, wherein the plurality of legitimate users are identified from among the plurality of users based on an associated privacy preserving Know Your Customer (KYC) check using a zero-knowledge proof system. Furthermore, the method includes receiving, via the one or more hardware processors, after initializing the CFO transaction mode, a CFO transaction request from a payer to a payee associated with the CSP, wherein the payer and the payee are legitimate users. Furthermore, the method includes computing, via the one or more hardware processors, a dynamic collateral factor associated with the payer and the payee when the payer and the payee are in the CFO transaction mode wherein the dynamic collateral factor is zero for a compliant transaction and non-zero for a non-compliant transaction. Furthermore, the method includes calculating, via the one or more hardware processors, a cumulative transaction value associated with the payer and the payee based on the dynamic collateral factor associated with the payer and the payee. Furthermore, the method includes initiating, via the one or more hardware processors, the CFO transaction between the payer and the payee if an associated wallet fund is above the cumulative transaction value. Furthermore, the method includes obtaining, via the one or more hardware processors, an undirected weighted regulatory non-compliance graph pertaining to the plurality of users associated with the CSP, wherein a wallet associated with each of the plurality of users is represented as nodes and non-compliant transactions between two wallets are represented as edges, wherein each edge is associated with dynamic weight and the dynamic weight indicates a total non-compliant transaction value exchanged between the associated wallets. Furthermore, the method includes computing, via the one or more hardware processors, a plurality of graph theoretic centrality measures comprising degree centrality and betweenness centrality by traversing the undirected weighted regulatory non-compliance graph associated with the CSP. Furthermore, the method includes deciding, via the one or more hardware processors, one or more further transactions between the payer and the payee based on a plurality of constraints, wherein the transaction mode is switched from the CFO transaction mode to Know your customer Staged Offline (KSO) transaction mode if the plurality of constraints are satisfied, wherein the plurality of constraints comprises (i) the collateral factor is greater than one (ii) the graph theoretic centrality measures are above a predefined threshold and (iii) one or more transaction settlement categories pertaining to the payer and the payee and, wherein the CFO transaction mode is continued if the plurality of constraints are not satisfied. Finally, the method includes completing, via the one or more hardware processors, the further transactions between the payer and the payee based on a plurality of transaction settlement policies, wherein the plurality of transaction settlement policies is one of (i) immediate settlement policy and (ii) synchronized settlement policy.

In another aspect, a system for privacy preserving and compliant central bank digital currency transactions is provided. The system includes at least one memory storing programmed instructions, one or more Input /Output (I/O) interfaces, and one or more hardware processors operatively coupled to the at least one memory, wherein the one or more hardware processors are configured by the programmed instructions to receive a Central Bank Digital Currency (CBDC) service subscription request from a plurality of users, wherein the CBDC service request is received by a CBDC Service Provider (CSP). Further, the one or more hardware processors are configured by the programmed instructions to initialize a Collateral Fully Offline (CFO) transaction mode for each of a plurality of legitimate users from among the plurality of users, in response to the received CBDC service subscription request, wherein the plurality of legitimate users are identified from among the plurality of users based on an associated privacy preserving Know Your Customer (KYC) check using a zero-knowledge proof system. Furthermore, the one or more hardware processors are configured by the programmed instructions to receive after initializing the CFO transaction mode, a CFO transaction request from a payer to a payee associated with the CSP, wherein the payer and the payee are legitimate users. Furthermore, the one or more hardware processors are configured by the programmed instructions to compute a dynamic collateral factor associated with the payer and the payee when the payer and the payee are in the CFO transaction mode wherein the dynamic collateral factor is zero for a compliant transaction and non-zero for a non-compliant transaction. Furthermore, the one or more hardware processors are configured by the programmed instructions to calculate a cumulative transaction value associated with the payer and the payee based on the dynamic collateral factor associated with the payer and the payee. Furthermore, the one or more hardware processors are configured by the programmed instructions to initiate the CFO transaction between the payer and the payee if an associated wallet fund is above the cumulative transaction value. Furthermore, the one or more hardware processors are configured by the programmed instructions to obtain an undirected weighted regulatory non-compliance graph pertaining to the plurality of users associated with the CSP, wherein a wallet associated with each of the plurality of users is represented as nodes and non-compliant transactions between two wallets are represented as edges, wherein each edge is associated with dynamic weight and the dynamic weight indicates a total non-compliant transaction value exchanged between the associated wallets. Furthermore, the one or more hardware processors are configured by the programmed instructions to compute a plurality of graph theoretic centrality measures comprising degree centrality and betweenness centrality by traversing the undirected weighted regulatory non-compliance graph associated with the CSP. Furthermore, the one or more hardware processors are configured by the programmed instructions to decide one or more further transactions between the payer and the payee based on a plurality of constraints, wherein the transaction mode is switched from the CFO transaction mode to Know your customer Staged Offline (KSO) transaction mode if the plurality of constraints are satisfied, wherein the plurality of constraints comprises (i) the collateral factor is greater than one (ii) the graph theoretic centrality measures are above a predefined threshold and (iii) one or more transaction settlement categories pertaining to the payer and the payee and, wherein the CFO transaction mode is continued if the plurality of constraints are not satisfied. Finally, the one or more hardware processors are configured by the programmed instructions to complete the further transactions between the payer and the payee based on a plurality of transaction settlement policies, wherein the plurality of transaction settlement policies is one of (i) immediate settlement policy and (ii) synchronized settlement policy.

In yet another aspect, a computer program product including a non-transitory computer-readable medium embodied therein a computer program for privacy preserving and compliant central bank digital currency transactions is provided. The computer readable program, when executed on a computing device, causes the computing device to receive a Central Bank Digital Currency (CBDC) service subscription request from a plurality of users, wherein the CBDC service request is received by a CBDC Service Provider (CSP). Further, computer readable program, when executed on a computing device, causes the computing device to initialize a Collateral Fully Offline (CFO) transaction mode for each of a plurality of legitimate users from among the plurality of users, in response to the received CBDC service subscription request, wherein the plurality of legitimate users are identified from among the plurality of users based on an associated privacy preserving Know Your Customer (KYC) check using a zero-knowledge proof system. Furthermore, computer readable program, when executed on a computing device, causes the computing device to receive after initializing the CFO transaction mode, a CFO transaction request from a payer to a payee associated with the CSP, wherein the payer and the payee are legitimate users. Furthermore, computer readable program, when executed on a computing device, causes the computing device to compute a dynamic collateral factor associated with the payer and the payee when the payer and the payee are in the CFO transaction mode wherein the dynamic collateral factor is zero for a compliant transaction and non-zero for a non-compliant transaction.Furthermore, computer readable program, when executed on a computing device, causes the computing device to calculate a cumulative transaction value associated with the payer and the payee based on the dynamic collateral factor associated with the payer and the payee. Furthermore, the computer readable program, when executed on a computing device, causes the computing device to initiate the CFO transaction between the payer and the payee if an associated wallet fund is above the cumulative transaction value. Furthermore, the computer readable program, when executed on a computing device, causes the computing device to obtain an undirected weighted regulatory non-compliance graph pertaining to the plurality of users associated with the CSP, wherein a wallet associated with each of the plurality of users is represented as nodes and non-compliant transactions between two wallets are represented as edges, wherein each edge is associated with dynamic weight and the dynamic weight indicates a total non-compliant transaction value exchanged between the associated wallets. Furthermore, the computer readable program, when executed on a computing device, causes the computing device to compute a plurality of graph theoretic centrality measures comprising degree centrality and betweenness centrality by traversing the undirected weighted regulatory non-compliance graph associated with the CSP. Furthermore, the computer readable program, when executed on a computing device, causes the computing device to decide one or more further transactions between the payer and the payee based on a plurality of constraints, wherein the transaction mode is switched from the CFO transaction mode to Know your customer Staged Offline (KSO) transaction mode if the plurality of constraints are satisfied, wherein the plurality of constraints comprises (i) the collateral factor is greater than one (ii) the graph theoretic centrality measures are above a predefined threshold and (iii) one or more transaction settlement categories pertaining to the payer and the payee and, wherein the CFO transaction mode is continued if the plurality of constraints are not satisfied. Finally, the computer readable program, when executed on a computing device, causes the computing device to complete the further transactions between the payer and the payee based on a plurality of transaction settlement policies, wherein the plurality of transaction settlement policies is one of (i) immediate settlement policy and (ii) synchronized settlement policy.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system for privacy preserving and compliant Central Bank Digital Currency (CBDC) transactions, in accordance with some embodiments of the present disclosure.
FIG. 1B is an example modular architecture diagram of the system of FIG. 1A for privacy preserving and compliant CBDC transactions in Collateral Fully Offline (CFO) mode, in accordance with some embodiments of the present disclosure.
FIG. 1C is an example modular architecture diagram of the system FIG. 1A for privacy preserving and compliant CBDC transactions in Know your customer Staged Offline Mode (KSO) mode, in accordance with some embodiments of the present disclosure.
FIGS. 2A and 2B illustrates a flow diagram for a processor implemented method for privacy preserving and compliant CBDC transactions, in accordance with some embodiments of the present disclosure.
FIG. 3 illustrates and example undirected weighted regulatory non-compliance graph for the processor implemented method for privacy preserving and compliant CBDC transactions, in accordance with some embodiments of the present disclosure.
FIG. 4 illustrates an example transaction settlement category for the processor implemented method for privacy preserving and compliant CBDC transactions, in accordance with some embodiments of the present disclosure.
FIGS. 5A through 5C illustrates an example transaction flow for the processor implemented method for privacy preserving and compliant CBDC transactions, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identify the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Bank of International Settlements (BIS) has formalized different variants of offline Central bank digital currency (CBDCs). The most relaxed version of offline CBDCs that is closest to the banknote operational model is fully-offline CBDCs. In the fully-offline CBDC, the transaction execution does not require a connection to the CBDC network (apart from a personal area network connection among the payer and payee), and the transaction settlement is immediate. Another version of offline CBDCs is a staged-offline CBDCs. In this transaction, execution is immediate and does not require a connection to the CBDC network, but the payee received funds remain unusable until the payee syncs with some CSP for transaction validation. There is a third model of offline CBDCs called intermittently offline CBDCs where the users must sync with the CBDC ledger in a bounded period of time. The third model is ignored in present disclosure.

Conventionally, there are two drawbacks in the design of models of present CBDC systems. Firstly, contemporary CBDC system designs consider a static model for user trust: the transaction execution and settlement policies are rigid, and not a function of the compliant/non-compliant behavior of the user while availing the system. Secondly, current CBDC system designs do not consider the collateral monetary effect of non-compliant transactions to the nation state: any non-compliant transaction will have a non-negative indirect financial loss to the nation, given the nature and seriousness of the regulatory violation. Thus, the design of a new accessible and compliant CBDC system to address and overcome these limitations is challenging.

The conceptualization, design requirements, and adoption requirements of CBDCs have been extensively studied. Nation/country specific conceptualizations of CBDC designs have been proposed in conventional approaches. Further, CBDC deployment at the rollup layer of blockchains has been proposed in some other conventional approaches. The regulatory/privacy tradeoffs and limitations of existing offline CBDC models as per the BIS classification have been comprehensively considered in some other conventional approaches.

Yet another conventional method proposed secure and rigorous CBDC system designs that incorporate regulatory computation for both the centralized and decentralized settings. Denial-of-service attack on token based CBDC systems with a public specification has been proposed in another conventional approach. A model of a collateralized interbank payment system for payment prioritizations and its effect on liquidity has been proposed in another conventional approach. The effect of CBDCs on the business model of commercial banks (which hold appropriate collateral from the central bank as they borrow from the central bank) has been studied in another conventional approach. However, none of the existing proposals consider that design of a retail CBDC system where the conflicting requirements of privacy and compliance are achieved simultaneously.

To address the above said challenges, embodiments herein provide a method and system for privacy preserving and compliant central bank digital currency transactions. The present disclosure provides a CBDC system that achieves privacy-preserving access for users and operates as a compliant system as defined by the nation state regulatory authority. In the present disclosure, the CBDC system operation policy for each user oscillates between new variant models of two of the well-established offline CBDC models originally proposed by the Bank of International Settlements (BIS) based on user behavior. In the first mode, the user is trusted to operate in a fully offline mode (Collateral Fully Offline (CFO)) under the promise of forfeiting a collateral to the state in case any transaction associated with it is deemed to be non-compliant. In the second mode (Know your customer Staged Offline Mode (KSO)), the user is untrusted and must operate in a staged offline setting with complete KYC for any transaction it is a part of.

**CFO mode**: Initially, every user of the service is trusted by the CBDC service provider. However, to establish trust, the user of the service needs to first undergo a proof of-residence protocol to ensure that the stated rules of the jurisdiction in which the user is operating are applicable. After the proof-of-residence succeeds, the user is entitled to operate in a fully offline mode. However, since the regulatory status of the user is non-determinate in a fully offline setting, the transaction terms for the user require that for every executed transaction, a collateral, which is a fraction (in value) of the value associated with the transaction, that is a part of the wallet balance, is unusable for both the payer and the payee. This collateral is redeemed when the stated payer and payee (individually or jointly) synchronize their wallets with the CBDC ledger. In essence, the collateral redemption is the incentive for the wallet users to synchronize their wallet state with the CBDC ledger, which gives the CBDC service provider an opportunity to determine the compliance status of the associated user.

**KSO mode**: In case it is determined that the user is violative of some compliance rules of the regulatory jurisdiction, the CBDC service provider can force the user wallet to operate in a staged-offline mode with full-KYC. Here, every transaction is executed immediately, but transaction settlement happens when the payee synchronizes with the CBDC service provider, given that every real-time regulatory transaction screening computation succeeds, and the CBDC service provider is privy to the complete KYC details of the payee. Therefore, this mode allows only compliant transactions to be settled, and non-compliant transactions to be reversed.

In the present disclosure all transactions between users (payer and payee) is conducted in privacy preserving manner. Privacy preserving transaction is a cryptographic construct where computations are performed on encrypted data.

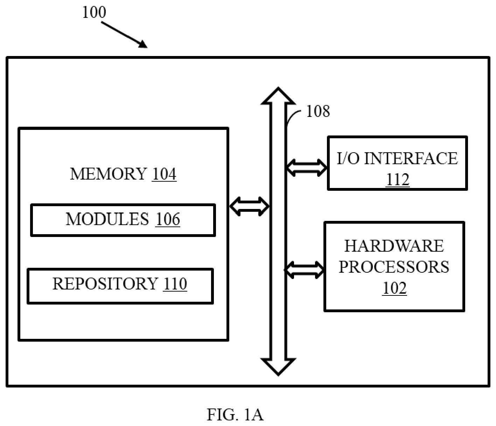

Referring now to the drawings, more particularly to FIGS. 1A through FIG. 5C, where similar reference characters denote corresponding features consistently throughout the figures, there are shown preferred embodiments, and these embodiments are described in the context of the following exemplary system and/or method.

FIG. 1A is a functional block diagram of a system 100 for privacy preserving and compliant central bank digital currency transactions, in accordance with some embodiments of the present disclosure. For example, the system 100 is a Central Bank Digital Currency (CBDC) Service Provider (CSP). A CSP is a private entity, like a commercial bank or payment service provider, that facilitates the use of CBDC by its customers/users. Essentially, they act as intermediaries, allowing users to access and utilize the CBDC, often through their existing banking infrastructure.

The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

The plurality of modules 106 includes programs or coded instructions that supplement applications or functions performed by the system 100 for a privacy preserving and CBDC transactions. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for privacy preserving and CBDC transactions.

The data repository (or repository) 110 may include a plurality of abstracted pieces of code for refinement and data that is processed, received, or generated as a result of the execution of the plurality of modules in the module(s) 106.

Although the data repository 110 is shown internal to the system 100, it will be noted that, in alternate embodiments, the data repository 110 can also be implemented externally to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory, a Relational Database Management System (RDBMS).

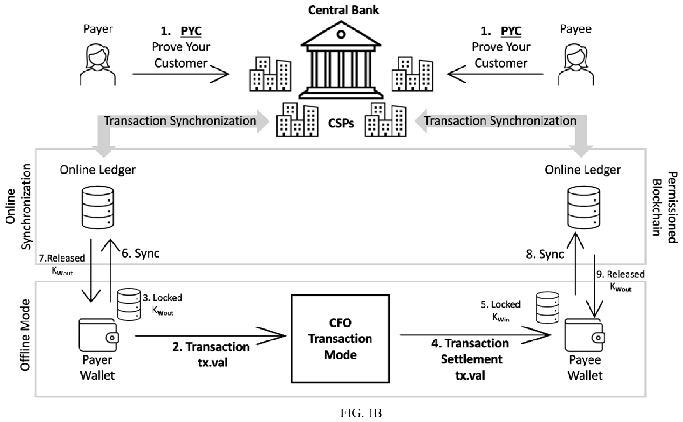

FIG. 1B is an example modular block diagram of the system of FIG. 1A for the privacy preserving and compliant CBDC transactions in Collateral Fully Offline (CFO) mode, in accordance with some embodiments of the present disclosure.

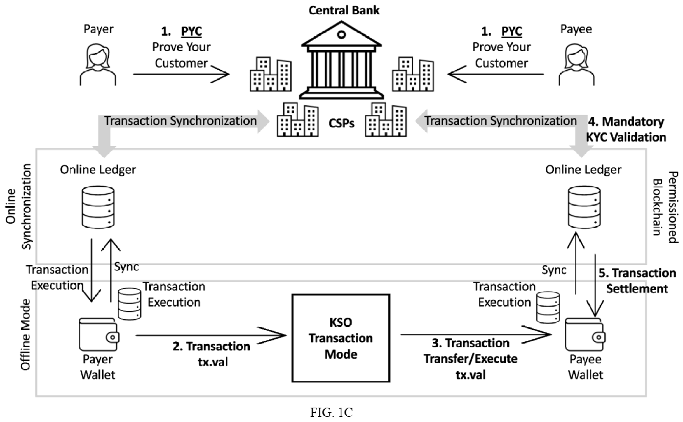

FIG. 1C is an example modular block diagram of the system of FIG. 1A for the privacy preserving and compliant CBDC transactions in Know your customer Staged Offline Mode (KSO) mode, in accordance with some embodiments of the present disclosure.

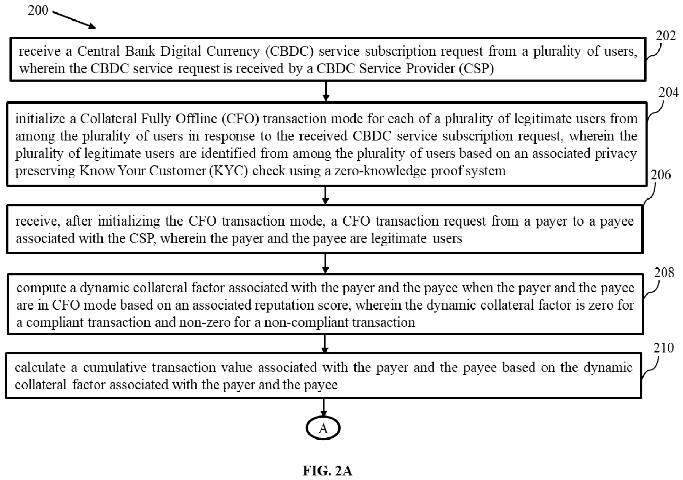

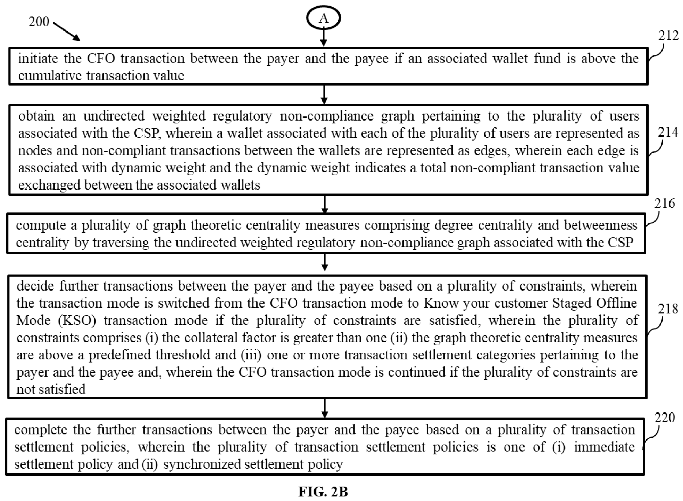

The working of the components of system 100 are explained with reference to the method steps depicted in FIGS. 2A and 2B, which is an exemplary flow diagram illustrating a method 200 for privacy preserving and compliant CBDC transactions implemented by the system of FIG. 1A and FIG. 1B, according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A, FIG. 1B and FIG. 1C and the steps of flow diagram as depicted in FIGS. 2A and 2B. The method 200 may be described in the general context of computer executable instructions. Generally, computer executable instructions can include routines, programs, objects, components, data structures, procedures, modules, functions, etc., that perform particular functions or implement particular abstract data types.

The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented with any suitable hardware, software, firmware, or combination thereof.

The CBDC service is available to the public in general (and not used for interbank payments or other financial institution transactions). The service should mimic a banknote economy, and so tokens serve as legal tenders. The CBDC system is two-tier: the central bank delegates a set of CBDC service provider banks to operate on its behalf and deploy the service under well specified regulatory rules. The CBDC service providers are referred to as currency service providers (CSPs). The users of the CBDC system operate as one of a payer (transaction initiator) or a payee (transaction recipient). It is assumed that the CSPs are honest in deploying the service and the users can be either compliant or non-compliant. Finally, it is also assumed that the CBDC system deployment is end-to-end secure, exactly as per the specified functionality.

Now referring to FIG. 2, at step 202 of method 200, the one or more hardware processors 102 are configured by the programmed instructions to receive a Central Bank Digital Currency (CBDC) service subscription request from a plurality of users, wherein the CBDC service request is received by a CBDC Service Provider (CSP). For example, the CBDC Service subscription request is a signup request where the users enter details like user data, target service specific data and the like.

At step 204 of the method 200, the one or more hardware processors 102 are configured by the programmed instructions to initialize a Collateral Fully Offline (CFO) transaction mode for each of a plurality of legitimate users from among the plurality of users in response to the received CBDC service subscription request, wherein the plurality of legitimate users are identified from among the plurality of users based on an associated privacy preserving Know Your Customer (KYC) check using a zero-knowledge proof system. The KYC is confirmed using Prove Your Customer (PYC).

**PYC:** For any legitimate user to avail the CBDC service, ideally, evidence of jurisdictional residence by the user should be furnished to the appropriate CSP. In order to achieve this goal, it is assumed that the nation state maintains an appropriately anonymized register of its citizens and other legals that can avail the service (such as permanent residents). One way to maintain such a register is to store the hash of the KYC of every potential user. This database is referred to as register. It is assumed that every potential legitimate user is given a positive index in a register, and when the register is queried for a non-sanctioned user, it returns some fixed non-positive value. A pseudocode for PYC is given below.

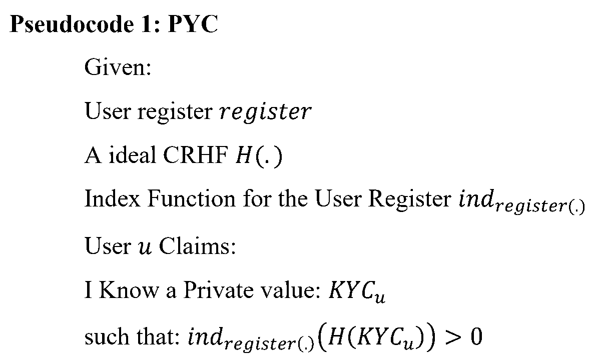

Prove Your Customer (PYC) is formalized as that every user needs to engage in to be eligible for the service. It is assumed that *H*(·) is a collision resistant hash function that is ideal under the random oracle model. The register contains the image of every potential user's KYC under the function *H*(·). This register is made available by the central bank to the CSPs for service instantiation, with a public index function *ind_{register}*(·). The predicate *P*(·) ∶= *ind_{register}*(*H*(·)) > 0. Now, to prove eligibility, every user *u* with KYC details *KYCᵤ* engages in a non-interactive zk-snark proof with the CSP (where the user is the prover and the CSP is the verifier), that the user holds a private witness *w* = *KYCᵤ* such that *P*(*w*) is true. Based on the success of this proof, a user is allowed to avail the service.

For example, every user (payer or payee) wallet is instantiated once the said user first completes the PYC protocol successfully. The user wallet is eligible to operate in the fully-offline mode, if and until it is deemed necessary by some CSP that the user wallet needs to transition to a more restrictive mode. However, for transaction *tx*, given a payer user (payer) associated with some wallet *W_{OUT}*, and the payee user (payee) associated with another wallet *W_{IN}*, there exist collateral factors *k_{W_{OUT}}*and *k_{W_{IN}}* respectively, such that for the transaction *tx* between *W_{OUT}* and *W_{IN}*, having value *tx*. *val*, the transaction is settled immediately only when: (i) the payer has the remaining funds to submit a collateral debt of value *k_{W_{OUT}}* × *tx*.*val* to the central bank, which are rendered unusable; and (ii) the payee wallet *W_{IN}* renders *k_{W_{IN}}* × *tx*.*val* value unusable from *tx* as collateral debt. This collateral debt from the payer and payee remains unusable until the transaction details (which are recorded in *k_{WO_{UT}}* and *k_{W_{IN}}*) are validated for compliance by some CSP, when both users, individually or jointly, sync with the CBDC ledger. Thus, wallet operation mode is referred to as the Collateralized Fully Offline (CFO) mode.

At step 206 of the method 200, the one or more hardware processors 102 are configured by the programmed instructions to receive, after initializing the CFO transaction mode, a CFO transaction request from a payer to a payee associated with the CSP, wherein the payer and the payee are legitimate users.

At step 208 of the method 200 the one or more hardware processors 102 are configured by the programmed instructions to compute a dynamic collateral factor associated with the payer and the payee when the payer and the payee are in CFO mode based on an associated reputation score, wherein the dynamic collateral factor is zero for a compliant transaction and non-zero for a non-compliant transaction.

For any financial transaction deemed non-compliant, there is a direct or indirect monetary loss induced to the nation state as a consequence of that transaction (consider Anti-Money Laundering (AML)/Countering the Financing of Terrorism (CFT) violations which can have orders of magnitude financial loss as a consequence of the non-compliant transaction). This monetary loss is referred to as a collateral debt induced by the non-compliant transaction. In the ideal case, this collateral debt should be computable. For example, there must exist an efficient regulatory algorithm (or a set of efficient algorithms) that output the monetary loss as a function of the non-compliant transaction value. Currently, there is no universal algorithm suite to characterize the financial losses incurred for an arbitrary non-compliant transaction. Hence, it is assumed that the central bank states a monetary policy for the CSPs to at least approximate the collateral debt.

**Dynamic collateral factor:** For every wallet *W*, the central bank either (i) approximates the induced collateral debt: for every CBDC transaction *tx* of value *tx*.*val*, associated with *W* in the capacity of either a payer or payee, there is a constant *k_{W}* ∈ (0, 1), such that the collateral debt to the nation state from a non-complaint *tx* is estimated to be no more than *k_{W}* × *tx*.*val* (in the capacity of both the payer and the payee) or (ii) precisely characterizes the induced collateral debt: for every CBDC transaction tx with value tx.val, there is a variable positive *kₜₓ*, such that the collateral debt to the nation state from a non-complaint tx is exactly *kₜₓ* × *tx*.*val* (in the capacity of both the payer and the payee), and *k_{W}* is updated as a function of *kₜₓ*.

At step 210 of the method 200, the one or more hardware processors 102 are configured by the programmed instructions to calculate a cumulative transaction value associated with the payer and the payee based on the dynamic collateral factor associated with the payer and the payee. The cumulative transaction value is computed using the formula (1 + *k*)(*tx*.*val*), *k* (kappa) is for the payer wallet.

At step 212 of the method 200, the one or more hardware processors 102 are configured by the programmed instructions to initiate the CFO transaction between the payer and the payee only if an associated wallet fund is above the cumulative transaction value

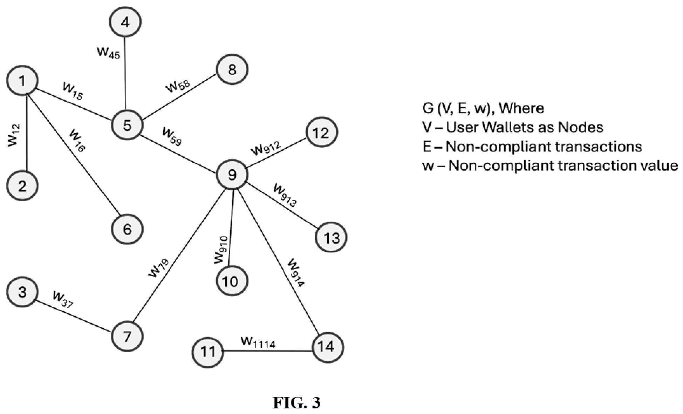

At step 214 of the method 200, the one or more hardware processors 102 is configured by the programmed instructions to obtain an undirected weighted regulatory non-compliance graph shown in FIG. 3 pertaining to the plurality of users associated with the CSP, wherein a wallet associated with each of the plurality of users are represented as nodes and non-compliant transactions between the wallets are represented as edges, wherein each edge is associated with dynamic weight and the dynamic weight indicates a total non-compliant transaction value exchanged between the associated wallets. The dynamic weight associated with the undirected weighted regulatory non-compliance graph is updated frequently.

FIG. 3 illustrates and example undirected weighted regulatory non-compliance graph for the processor implemented method for privacy preserving and compliant CBDC transactions, in accordance with some embodiments of the present disclosure. Now referring to FIG. 3, the undirected weighted regulatory non-compliance weighted undirected graph is represented as *G* = (*V_{G}*, *E_{G}*, *w_{G}*(·)) by the CSPs, to determine the transition policy for specific non-compliant wallets from the CFO mode to the KSO mode. The vertices *V_{G}* in this graph represent all the wallets operational under the present disclosure. The edges part of the edge set *E_{G}* of the graph represent the existence of non-compliant transactions between the wallets incident on the present edges in *E_{G}*. The weight function *w_{G}*(·) of the graph maps every edge to the total non-compliant value exchanged between the associated wallets. For instance, for a pair of wallets *v*₁, *v*₂ ∈ *V_{G}*, given the existence of an edge *e*_{*v*₁,*v*₂} ∈ *E_{G}*, *w_{G}*(*e*_{*v*₁,*v*₂})) is the total non-compliant value exchanged between *v*₁ and *v*₂.

At step 216 of the method 200, the one or more hardware processors 102 is configured by the programmed instructions to compute a plurality of graph theoretic centrality measures comprising degree centrality and betweenness centrality by traversing the undirected weighted regulatory non-compliance graph associated with the CSP.

**Degree centrality:** Given an arbitrary weighted undirected graph *G* = (*V_{G}*, *E_{G}, w_{G}*(·)), with *ŵ_{G}* denoting the maximum edge weight of any edge in *E_{G},* the degree centrality (unweighted and weighted) of a vertex v for the graph G is given by equation (1) and equation (2). ${DC}_{G} \left(v\right) : = \frac{degree of the vertex v in G}{\left|{V}_{G}\right| - 1}$ (1) ${WDC}_{G} \left(v\right) : = \frac{{\sum }_{{e}_{v , v ′} ∈ {E}_{G}} {w}_{G} \left({e}_{v , v ′}\right)}{\left(\left|{V}_{G}\right|-1\right) ∗ {\hat{w}}_{G}}$ (2)

**Betweenness centrality:** Given an arbitrary weighted undirected graph *G =* (*V_{G}, E_{G}, w_{G}*(·)), with paths (*v*₁, *v*₂) denoting all shortest paths between vertices *v*₁, *v*₂ ∈ *V_{G},,* and paths (*v'*; *v*1, *v*2) denoting all shortest paths between vertices *v*₁, *v*₂ ∈ *V_{G}* that pass through *v'* ∈ *G*, the betweenness centrality (unweighted and weighted) of a vertex v for the graph G is given by equations (3) and (4). ${BC}_{G} \left(v\right) : = {\sum }_{s , t ∈ {V}_{G}} \frac{\left|paths\left(v; s; t\right)\right|}{\left|paths\left(s, t\right)\right|}$ (3) ${WBC}_{G} \left(v\right) : = {\sum }_{s , t ∈ {V}_{G}} \frac{weight of paths \left(v; s; t\right)}{weight of paths \left(s, t\right)}$ (4) It is well established that degree centrality is optimally computable with a time complexity of *O*(|*E_{G}*|), but the same cannot be said for betweenness centrality, the time complexity of which can vary from *O*(|*V_{G}*|³) by computing all-pair shortest paths, to *O*(|*V_{G}*|² × *log* |*V_{G}*| + |*V_{G}*| × |*E_{G}*|) through specialized algorithms.

At step 218 of the method 200, the one or more hardware processors 102 is configured by the programmed instructions to decide further transactions based on a plurality of constraints, wherein the transaction mode is switched from the CFO transaction mode to Know your customer Staged Offline Mode (KSO) transaction mode if the plurality of constraints are satisfied, wherein the plurality of constraints comprises (i) the collateral factor is greater than one (ii) the graph theoretic centrality measures are above a predefined threshold and (iii) one or more transaction settlement categories pertaining to the payer and the payee and, wherein the CFO transaction mode is continued if the plurality of constraints are not satisfied. At least one of the payer and the payee is authenticated during every transaction in KSO mode. For example, the transaction settlement policy is defined as: (i) the transaction mode is the CFO mode when both the payer and payee are in the CFO mode and (ii) If at least one of the payer and payee is in the KSO mode, the transaction mode is the KSO mode.

For example, if a user is deemed violative by some CSP of the regulatory specification provided by the central bank, the user wallet is relegated by the CSP to operate in a staged-offline mode with full-KYC. For example, considering any relegated user *u* with details *KYCᵤ*, the value associated with every received transaction by u is only usable once the user syncs with some CSP associated with the CBDC ledger, furnishes the details of *KYCᵤ* completely, and the real-time regulatory checks associated with the transaction succeed before that transaction is settled. We refer to this wallet operation mode as the Full KYC based KSO mode.

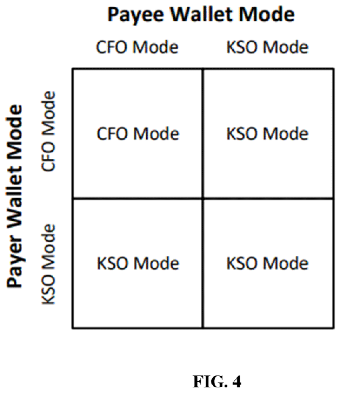

Given the hybrid design of the present disclosure, where every user wallet is in one of the CFO and KSO modes, how the transactions are executed (in terms of exchange and settlement), for every combination of the payer wallet and the payee wallet is outlined here. Wallet operation policies in general should conform to the principle of least privilege: for any pair of payer and payee, the transaction execution rule should be determined depending on the least trusted of the two. Therefore, for a given transaction, if at least one of the payer and payee wallets is in the KSO mode, then for that specific transaction, both the payer and payee wallets should operate as per the KSO mode. If for a given transaction, if both the payer and payee wallets are in the CFO mode, then for that specific transaction, both the payer and payee wallets should operate as per the CFO mode. The transaction settlement category is illustrated in FIG. 4.

FIG. 4 illustrates an example transaction settlement category for the processor implemented method for privacy preserving and compliant CBDC transactions, in accordance with some embodiments of the present disclosure. Now referring to FIG. 4, the one or more transaction settlement category is defined as: (i) the transaction mode is the CFO transaction mode when both the payer and payee are in the CFO transaction mode and (ii) If at least one of the payer and payee is in the KSO transaction mode, the transaction mode is the KSO transaction mode.

At step 220 of the method 200, the one or more hardware processors 102 is configured by the programmed instructions to complete the further transactions between the payer and the payee based on a plurality of transaction settlement policies, wherein the plurality of transaction settlement policies is one of (i) immediate settlement policy and (ii) synchronized settlement policy.

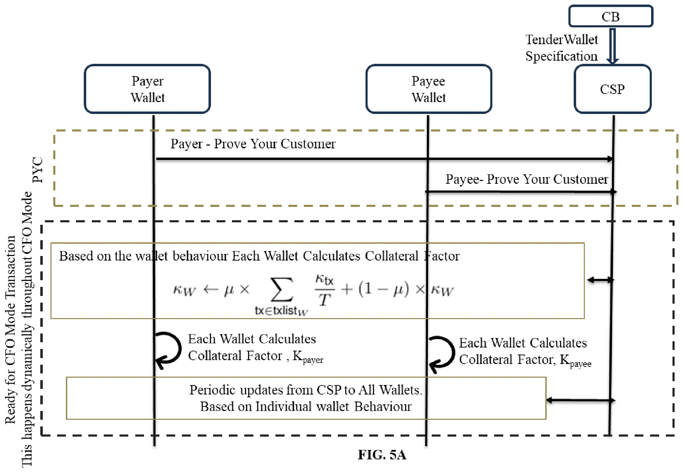

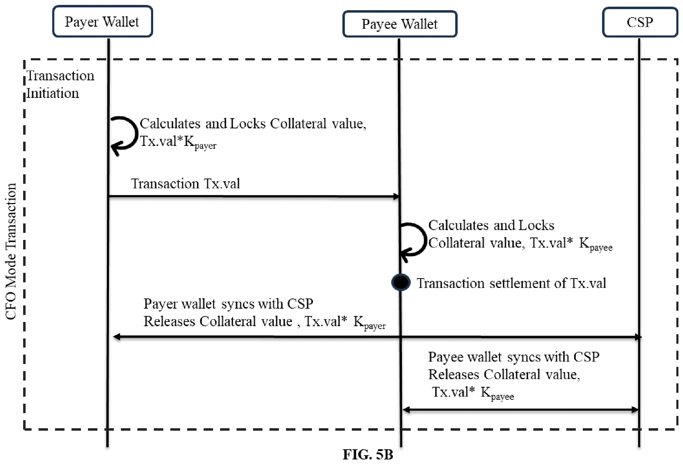

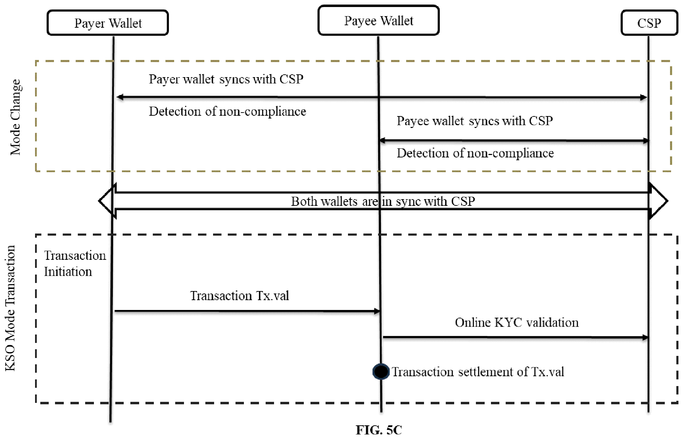

FIGS. 5A through 5C illustrates an example transaction flow for the processor implemented method for privacy preserving and compliant CBDC transactions, in accordance with some embodiments of the present disclosure.

### Use Cases -Wallet Mode Transition Policy:

**Use case 1- Computable Transaction Collateral Debt:** An ideal case where for every compliant transaction the collateral factor is zero, and for every non-compliant transaction *tx*, the transaction collateral factor *kₜₓ* is computable, or can be approximated by the CSP is considered. Recall that the collateral factor of a transaction is the fraction of the transaction value that is a minimum collateral debt to the nation state due to the regulatory violation associated with the transaction.

In this case, given a wallet *W* with a wallet collateral factor *k_{W}*, assuming that during the CFO offline phase no more than *T* transactions are permitted to be executed, every transaction tx in *W* has a public purpose *tx*.*purpose* that is required to compute *kₜₓ*, and *txlist_{W}* is the list of transactions executed by the user of *W* as a payer or a payee, for some µ ∈ (0, 1), the following update rule for the collateral factor of wallet *W* is given as shown in equation (5). ${k}_{W} ← μ ∗ {\sum }_{tx ∈ {txlist}_{W}} \frac{{k}_{tx}}{T} + \left(1-μ\right) ∗ {k}_{W}$ (5) The above update rule is used since it is asymptotically stable: when the collateral factor *k_{W}* state is interpreted as a dynamical system, it converges to a fixed point, in case the regulatory violations stabilize, the violating user makes *T* transactions in every offline phase, and µ is chosen to be some $value \leq \frac{1}{2}$. The wallet mode transition policy for this case is: for any synchronization round of wallet W, if the updated collateral factor *k_{W}* is greater than say 1, the wallet switches the operation mode from the CFO mode to the KSO mode.

**Use case 2- Identifiable Non-Compliant Transactions: A** simpler case where the CSP can only detect if a transaction is one of compliant or non-compliant but cannot determine what collateral debt a non-compliant transaction can induce on the nation state is explained here. In this case, the following strategies are designed for wallet mode transition: given '*n*' wallets in operation in the CFO mode, choose k wallets (for some *k* < *n*) that have the highest cumulative non-compliant transaction value, to transition to the KSO mode. This strategy is NP-complete to compute for any arbitrary *k.* Considering approximations to find the most eligible *k* wallets to transition, degree centrality and betweenness centrality are considered as a viable approximation. The degree centrality would represent those wallets that have the highest number of adjacent wallets that are violative of the regulatory rules, and betweenness centrality would represent those wallets that have the highest presence in all violative transaction paths.

Considering the graph *G* of FIG. 3, the following wallet transition strategy is proposed for the CSPs: every CSP can decide to transition *k* of the n wallets from CFO mode to KSO mode, with some *k* ∈ *Θ*(*n*), based on the properties of *G*. For instance, considering ${∨}_{k}^{{cen}_{G} \left(.\right)}$ *as* the highest *k*-subset of *V_{G}* in terms of the centrality function *cenG*(·) on graph *G*, where, *cenG*(·) can be chosen from {*DC_{G}*(· *), WDC_{G}*(·), *BC_{G}*(·), *WBC_{G}*(·)}. Now, the CSP can transition wallets in ${∨}_{k}^{{cen}_{G} \left(.\right)}$ *from* the CFO mode to the KSO mode.

### Optimization of present disclosure:

**CFO Mode - Graded Collateralization:** The central bank (or the system designer in general) may argue that an immediate transition of a non-compliant user wallet from the CFO mode to the KSO is too strict. Hence a graded version of the CFO mode is presented. The central bank can designate *K* collateral factors (*kᵢ*)_{i∈[K]}, with ∀*ᵢ*∈ *[K - 1], kᵢ* < *k*_{*i*+1}. A user wallet *W* is in *CFO*(*kⱼ)* mode, if it is operating in the CFO mode with *k_{W}* = *kⱼ* for some *kⱼ* ∈ (*kᵢ*)_{i∈[K]}. This modified CFO mode gives more freedom for the users to participate longer in the fully-offline phase, progressively reduces the time the user can remain offline due to the induced increasing collateral payments, and even relaxes the computational requirements associated with wallet state verification for the CSP.
**Wallet transition policy:** If a user wallet operating in the *CFO*(*kⱼ)* mode is deemed violative in some synchronization round by some CSP, then the said user's wallet is transitioned into the *CFO*(*k*_{*j*+1}) mode if *j* ∈ *[K* - 1], or the said user's wallet is transitioned into the KSO mode if *j = K.*

**CFO Mode- Reputation based Collateralization:** The central bank (or the system designer) may also reason that a collateral policy of a user should be a function of the user's financial reputation (for instance the credit score of the user). The higher the financial reputation of the user, the lower should be the associated wallet collateral factor. Hence, an amendment of the CFO mode is represented as a function of the user's reputation. Considering again that the central bank designates *K* collateral factors *κ* := (*kᵢ*)_{i∈[K]}., with ∀*i* ∈ [*K* - *1*], *kᵢ* < *k*_{*i*+1}. The central bank associates a reputation score *repscoreᵤ* ∈ [0, 1] with every user *u*, and this reputation score is computable as a part of *KYCᵤ.* The central bank provides a non-increasing function *f_{col}* : [0, 1] → *κ* to compute a user's wallet collateral factor as a function of its reputation score. A pseudocode 2 for Prove your Reputed Customer (PYRC) is given below.

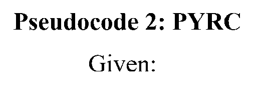

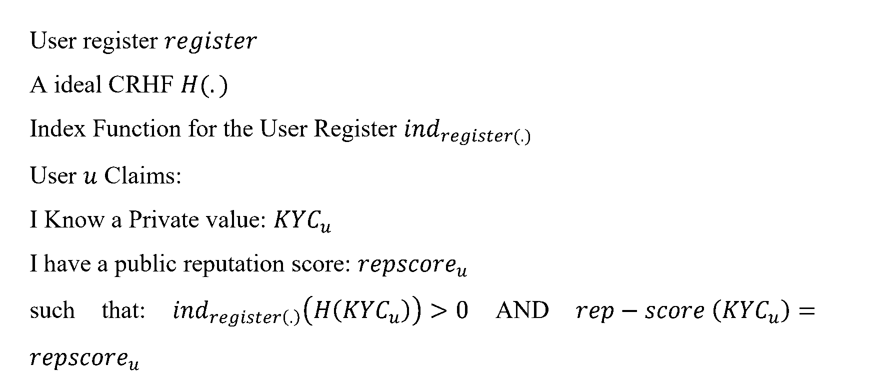

**Prove Your Reputed Customer:** The predicate *P*(·) is defined as a combination of two predicates *P*(·) := *P*₁(·) *and P*₂(·); where *P*₁(·) := "*ind_{register}*(*H*(·)) *>* 0", and we introduce *P*₂(·) := *"rep - score*(·) = *repscore".* Here, rep-score is a function of the user's KYC that outputs the user's corresponding reputation score. Now, to prove eligibility to operate in the CBDC system, every user u with private KYC details *KYCᵤ* and a claimed public reputation score *repscoreᵤ* engages in a non-interactive zk-snark proof with the CSP (where the user is the prover and the CSP is the verifier), that the user holds a private witness *KYCᵤ* such that *P*(*KYCᵤ*) is true. We summarize this protocol above. Based on the success of this protocol, a user is allowed to avail the CBDC service in the CFO mode with a wallet collateral factor as *f_{col}*(*repscoreᵤ*).

**Faulty Currency Service Providers:** Considering the possibility that some CSPs might be faulty: either they are Byzantine, or they have some exogenous utility to deviate from the prescribed system (for instance, the CSPs can be bribed). In this case, the CBDC ledger and wallet state maintenance can be deployed over a permissioned blockchain protocol executed by all CSPs. This will allow the system to function in a fault-tolerant manner in case the number of faulty CSPs is less than one-third of the total number of CSPs (assuming the CSPs are operating over a partially synchronous network). Furthermore, there exist permissioned blockchain protocols that provide proofs-of-deviation of consensus protocol participants, which can be leveraged by the central bank to formally penalize the CSPs deviating from the prescribed specification of maintaining the CBDC (distributed) ledger.

**CBDC Economy Throughput under Faulty CSPs:** Due to the inherent limits of decentralization, a blockchain based CBDC ledger and wallet state management system would be much slower than an equivalent centralized system. However, recent advances in tokenized state machine replication protocols that output a blockchain, if the CSPs are appropriately initialized with a share of consensus stake, then the convergent throughput of the system is equivalent to that of a constant number of system maintaining non-faulty nodes (and not a function of the total number of CSPs).

**Bi-Directional Wallet Operation Transition:** The default specification of the present disclosure does not allow a user to return to the CFO mode once it transitions into the KSO mode. Inspired from the intermittently-offline mode, the central bank can designate that a violative user can revert to the default CFO mode, or equivalently in the graded CFO mode or the reputation-based CFO mode as the case may be, after spending a known bounded time interval in the KSO mode. This policy would be more user friendly, and again reduce the computational burden of the CSPs.

**CFO Mode: Alternate Asset Collateral:** The central bank may consider collateral assets differing from its own digital currency, that the CSP or any state certified agency may additionally serve. These could be one of or a combination of native cryptocurrencies, non-native tokens, stablecoins or any token that is competitive in value with the nation state's currency. However, this would require every user wallet to maintain sufficient funds for the collateral chosen digital currency, which might prohibit a scalable deployment of the CBDC.

### Considering other hybrid CBDC designs:

**Dual Wallet CBDC System:** Considering a CBDC system where each wallet maintains two sub-wallets simultaneously. One may consider a wallet with a CFO sub-wallet and a KSO sub-wallet, giving the user the flexibility to choose a particular sub-wallet for any transaction. Unfortunately, this design will require the CBDC service provider to maintain two states per user and complicate the wallet software configuration. The present disclosure avoids this complication by maintaining every wallet in a single wallet mode.

**An Offline/Online Wallet CBDC System:** Considering a CBDC system where the CBDC service provider gives the user an option to choose between a token-based wallet or an online state-based wallet. Unfortunately, in such a system, tokens will need to be minted or burnt in transactions involving one party having a token based wallet and the other party having an online wallet. This computational overhead might decrease the throughput of the associated CBDC economy. The present disclosure avoids this problem by ensuring some (trusted) users operate in an offline mode and other (untrusted) users operate in a staged offline mode, which is indistinguishable in functionality from the online mode.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The present disclosure provides a privacy preserving compliant CBDC transactions. The privacy preserving transactions refer to methods for conducting financial or data transactions while safeguarding the confidentiality of the participants and transaction details. This is crucial in scenarios where sensitive information needs to be protected, such as in blockchain-based systems where transactions are often public by default. Compliant CBDC transactions are performed by deciding transaction modes based on user behavior represented in the form of an undirected weighted regulatory non-compliance graph.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit **(**ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200), the method comprising:
receiving (202), via one or more hardware processors, a Central Bank Digital Currency (CBDC) service subscription request from a plurality of users, wherein the CBDC service request is received by a CBDC Service Provider (CSP);
initializing (204), via the one or more hardware processors, a Collateral Fully Offline (CFO) transaction mode for each of a plurality of legitimate users from among the plurality of users, in response to the received CBDC service subscription request, wherein the plurality of legitimate users are identified from among the plurality of users based on an associated privacy preserving Know Your Customer (KYC) check using a zero-knowledge proof system;
receiving (206), via the one or more hardware processors, after initializing the CFO transaction mode, a CFO transaction request from a payer to a payee associated with the CSP, wherein the payer and the payee are legitimate users;
computing (208), via the one or more hardware processors, a dynamic collateral factor associated with the payer and the payee when the payer and the payee are in the CFO transaction mode wherein the dynamic collateral factor is zero for a compliant transaction and non-zero for a non-compliant transaction;
calculating (210), via the one or more hardware processors, a cumulative transaction value associated with the payer and the payee based on the dynamic collateral factor associated with the payer and the payee;
initiating (212), via the one or more hardware processors, the CFO transaction between the payer and the payee if an associated wallet fund is above the cumulative transaction value;
obtaining (214), via the one or more hardware processors, an undirected weighted regulatory non-compliance graph pertaining to the plurality of users associated with the CSP, wherein a wallet associated with each of the plurality of users is represented as nodes and non-compliant transactions between two wallets are represented as edges, wherein each edge is associated with dynamic weight and the dynamic weight indicates a total non-compliant transaction value exchanged between the associated wallets;
computing (216), via the one or more hardware processors, a plurality of graph theoretic centrality measures comprising degree centrality and betweenness centrality by traversing the undirected weighted regulatory non-compliance graph associated with the CSP;
deciding (218), via the one or more hardware processors, one or more further transactions between the payer and the payee based on a plurality of constraints, wherein the transaction mode is switched from the CFO transaction mode to Know your customer Staged Offline (KSO) transaction mode if the plurality of constraints are satisfied, wherein the plurality of constraints comprises (i) the collateral factor is greater than one (ii) the graph theoretic centrality measures are above a predefined threshold and (iii) one or more transaction settlement categories pertaining to the payer and the payee and, wherein the CFO transaction mode is continued if the plurality of constraints are not satisfied; and
completing (220), via the one or more hardware processors, the further transactions between the payer and the payee based on a plurality of transaction settlement policies, wherein the plurality of transaction settlement policies is one of (i) immediate settlement policy and (ii) synchronized settlement policy.

2. The method as claimed in claim 1, wherein at least one of the payer and the payee is authenticated during every transaction in the KSO transaction mode.

3. The method as claimed in claim 1, wherein the dynamic weight associated with the undirected weighted regulatory non-compliance graph is updated in a predefined time.

4. The method as claimed in claim 1, wherein the one or more transaction settlement category is defined as: (i) the transaction mode is the CFO transaction mode when both the payer and payee are in the CFO transaction mode and (ii)If at least one of the payer and payee is in the KSO transaction mode, the transaction mode is the KSO transaction mode.

5. The method as claimed in claim 1, wherein the dynamic collateral factor is a function of a plurality of transaction collateral factors, a plurality of transactions, a plurality of recent wallet collateral factors and a convergence factor for equilibrium, wherein the convergence factor is a fraction.

6. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:
receive a Central Bank Digital Currency (CBDC) service subscription request from a plurality of users, wherein the CBDC service request is received by a CBDC Service Provider (CSP);
initialize a Collateral Fully Offline (CFO) transaction mode for each of a plurality of legitimate users from among the plurality of users, in response to the received CBDC service subscription request, wherein the plurality of legitimate users are identified from among the plurality of users based on an associated privacy preserving Know Your Customer (KYC) check using a zero-knowledge proof system;
receive, after initializing the CFO transaction mode, a CFO transaction request from a payer to a payee associated with the CSP, wherein the payer and the payee are legitimate users;
compute a dynamic collateral factor associated with the payer and the payee when the payer and the payee are in the CFO transaction mode wherein the dynamic collateral factor is zero for a compliant transaction and non-zero for a non-compliant transaction;
calculate a cumulative transaction value associated with the payer and the payee based on the dynamic collateral factor associated with the payer and the payee;
initiate the CFO transaction between the payer and the payee if an associated wallet fund is above the cumulative transaction value;
obtain an undirected weighted regulatory non-compliance graph pertaining to the plurality of users associated with the CSP, wherein a wallet associated with each of the plurality of users is represented as nodes and non-compliant transactions between two wallets are represented as edges, wherein each edge is associated with dynamic weight and the dynamic weight indicates a total non-compliant transaction value exchanged between the associated wallets;
compute a plurality of graph theoretic centrality measures comprising degree centrality and betweenness centrality by traversing the undirected weighted regulatory non-compliance graph associated with the CSP;
decide one or more further transactions between the payer and the payee based on a plurality of constraints, wherein the transaction mode is switched from the CFO transaction mode to Know your customer Staged Offline (KSO) transaction mode if the plurality of constraints are satisfied, wherein the plurality of constraints comprises (i) the collateral factor is greater than one (ii) the graph theoretic centrality measures are above a predefined threshold and (iii) one or more transaction settlement categories pertaining to the payer and the payee and, wherein the CFO transaction mode is continued if the plurality of constraints are not satisfied; and
complete the further transactions between the payer and the payee based on a plurality of transaction settlement policies, wherein the plurality of transaction settlement policies is one of (i) immediate settlement policy and (ii) synchronized settlement policy.

7. The system as claimed in claim 6, wherein at least one of the payer and the payee is authenticated during every transaction in the KSO transaction mode.

8. The system as claimed in claim 6, wherein the dynamic weight associated with the undirected weighted regulatory non-compliance graph is updated in a predefined time.

9. The system as claimed in claim 6, wherein the one or more transaction settlement category is defined as: (i) the transaction mode is the CFO transaction mode when both the payer and payee are in the CFO transaction mode and (ii) If at least one of the payer and payee is in the KSO transaction mode, the transaction mode is the KSO transaction mode.

10. The system as claimed in claim 6, wherein the dynamic collateral factor is a function of a plurality of transaction collateral factors, a plurality of transactions, a plurality of recent wallet collateral factors and a convergence factor for equilibrium, wherein the convergence factor is a fraction.

11. One or more non-transitory machine-readable information storage mediums comprising one or more instructions which when executed by one or more hardware processors cause:
receiving a Central Bank Digital Currency (CBDC) service subscription request from a plurality of users, wherein the CBDC service request is received by a CBDC Service Provider (CSP);
initializing a Collateral Fully Offline (CFO) transaction mode for each of a plurality of legitimate users from among the plurality of users, in response to the received CBDC service subscription request, wherein the plurality of legitimate users are identified from among the plurality of users based on an associated privacy preserving Know Your Customer (KYC) check using a zero-knowledge proof system;
receiving after initializing the CFO transaction mode, a CFO transaction request from a payer to a payee associated with the CSP, wherein the payer and the payee are legitimate users;
computing a dynamic collateral factor associated with the payer and the payee when the payer and the payee are in the CFO transaction mode wherein the dynamic collateral factor is zero for a compliant transaction and non-zero for a non-compliant transaction;
calculating a cumulative transaction value associated with the payer and the payee based on the dynamic collateral factor associated with the payer and the payee;
initiating the CFO transaction between the payer and the payee if an associated wallet fund is above the cumulative transaction value;
obtaining an undirected weighted regulatory non-compliance graph pertaining to the plurality of users associated with the CSP, wherein a wallet associated with each of the plurality of users is represented as nodes and non-compliant transactions between two wallets are represented as edges, wherein each edge is associated with dynamic weight and the dynamic weight indicates a total non-compliant transaction value exchanged between the associated wallets;
computing a plurality of graph theoretic centrality measures further comprising degree centrality and betweenness centrality by traversing the undirected weighted regulatory non-compliance graph associated with the CSP;
deciding one or more further transactions between the payer and the payee based on a plurality of constraints, wherein the transaction mode is switched from the CFO transaction mode to Know your customer Staged Offline (KSO) transaction mode if the plurality of constraints are satisfied, wherein the plurality of constraints comprises (i) the collateral factor is greater than one (ii) the graph theoretic centrality measures are above a predefined threshold and (iii) one or more transaction settlement categories pertaining to the payer and the payee and, wherein the CFO transaction mode is continued if the plurality of constraints are not satisfied; and
completing the further transactions between the payer and the payee based on a plurality of transaction settlement policies, wherein the plurality of transaction settlement policies is one of (i) immediate settlement policy and (ii) synchronized settlement policy.

12. The one or more non-transitory machine-readable information storage mediums of claim 11, wherein at least one of the payer and the payee is authenticated during every transaction in the KSO transaction mode.

13. The one or more non-transitory machine-readable information storage mediums of claim 11, wherein the dynamic weight associated with the undirected weighted regulatory non-compliance graph is updated in a predefined time.

14. The one or more non-transitory machine-readable information storage mediums of claim 11, wherein the one or more transaction settlement category is defined as: (i) the transaction mode is the CFO transaction mode when both the payer and payee are in the CFO transaction mode and (ii)If at least one of the payer and payee is in the KSO transaction mode, the transaction mode is the KSO transaction mode.

15. The one or more non-transitory machine-readable information storage mediums of claim 11, wherein the dynamic collateral factor is a function of a plurality of transaction collateral factors, a plurality of transactions, a plurality of recent wallet collateral factors and a convergence factor for equilibrium, wherein the convergence factor is a fraction.
